# EUROPEAN PATENT APPLICATION

(11) **EP 1 804 479 A1**
(43) Date of publication of application: **04.07.2007**
(21) Application number: 06256618.7
(22) Date of filing: 29.12.2006
(51) Int. Cl.: H04M 15/00, H04M 3/36, H04Q 3/00

(54) **System, device and method for operation and maintenance of network devices by analysis of CDRs**

(30) Priority: 30.12.2005 CN 200510137467
(71) Applicant: Huawei Technologies Co., Ltd., Longgang District Shenzhen Guangdong 518129 (CN)
(72) Inventor: Wu, Dongjun, c/o Huawei Administration Building, Shenzhen 158129, Guangdong (CN); Wang, Hui, c/o Huawei Administration Building, Shenzhen 158129, Guangdong (CN); Chen, Yujie, c/o Huawei Administration Building, Shenzhen 158129, Guangdong (CN)
(74) Representative: Mounteney, Simon James

(57) **Abstract**

A system for operation and maintenance of network devices, including a device layer including at least one network device and a pre-processing layer including pre-processing device(s); the network device obtains a CDR of a call and transmits the CDR to the pre-processing device; the pre-processing device filters the CDR and performs centralized operation and maintenance of network devices. The network device forming the device layer, the pre-processing device forming the pre-processing layer and a method for operation and maintenance of network devices in the above system are also provided. Through the technical scheme, call services are separated from operation and maintenance management and functions of the network devices are unified, which results in more stable operation of the network devices; the operation and maintenance management will be more flexible and it becomes easier to monitor the whole network and to perform operation and maintenance of network devices.

## Description

### Field of the Invention

The present invention relates to network communication technology, and particularly, to a system, a device and a method for operation and maintenance of network devices.

### Background of the Invention

Along with the network evolvement and network function development, the competition focus of network devices has gradually shifted to functions of operation and maintenance. Operators need to learn about the performance of networks, realizing the functions of monitoring performance, isolating and locating performance problems, forecasting performance tendency, analyzing behaviors of VIP users and analyzing causes of failures according to user complaints.

The current method for operation and maintenance of network devices mainly includes the following steps:
Step 1: an operator creates measurement tasks in a graphic user interface (GUI), such as setting measurement periods/intervals, measurement objects, measurement types, time, etc. The created tasks are issued directly to the network devices which perform dot calculation of measurement performance types based on the measurement tasks received.
Step 2: according to the measurement task, relevant data collecting points (DCP) report the data that meets the requirement to a network element operation and maintenance (NE OM) or an element management (EM), the data that fail to meet the requirement are not reported;
Step 3: the NE OM or EM generates for every measurement task a measurement result, i.e., the performance measurement result, according to the data received, and saves the measurement result in a file or a database, or reports the measurement result to a GUI network manager; the network manager may also inquire the NE OM / EM about the measurement result of an appointed measurement task;
Step 4: when the measurement task comes to an end, or when the operator deletes the measurement task, the relevant DCPs stop reporting data to the NE OM or EM.

It can be seen from the above description that according to the method for operation and maintenance of network devices in the prior art, when new resources are added while network devices are carrying out a measurement task, even if the newly added resources meet the requirement specified by the measurement task, the new resources cannot be included in the measurement task automatically and thus adaptive measurement cannot be achieved. In such a method, measurement tasks have to be established in advance, hence the type data cannot be collected if corresponding type is not included in the measurement task, which makes it hard for the method to support post-analysis; moreover, as performance measurement types are calculated within network devices, the system cannot provide performance type statistics of a single call.

### Summary of the Invention

Embodiments of the present invention provide a system, a device and a method for operation and maintenance of network devices to realize a more flexible operation and maintenance process and more comprehensive operation and maintenance management.

A method for operation and maintenance of network devices, includes:
obtaining a call detail record (CDR) of a call and transmitting the CDR;
performing operation and maintenance of network devices according to the CDR received.

The CDR of the call includes at least one of the following:
data related to message sending / receiving bit lists indicating the sending / receiving status of standard signaling messages in the call on the calling / called side,
sending / receiving time of standard signaling messages in the call, corresponding object information of the call; and
corresponding service attribute information of the call.

The step of obtaining the CDR of a call includes at least one of the following:
obtaining the CDR of a normally terminated call;
obtaining the CDR of a call terminated in malfunction;
obtaining the CDR of a call which fails before being answered;
obtaining the CDR of an occurred supplementary service; or
obtaining the CDR of an active call periodically.

The step of obtaining the CDR of a call and transmitting the CDR further includes:
obtaining periodically current time information of network devices and transmitting the current time information.

The step of performing the operation and maintenance management of network devices according to the CDR received includes:
performing performance measurement type calculation according to the CDR received.

The method, before the step of performing the performance measurement type calculation according to the CDR, further includes:
filtering the CDR received according to filter criteria saved; and
obtaining the CDR that affects results of the performance measurement type calculation;
wherein the step of performing the performance measurement type calculation according to the CDR includes:
performing performance measurement type calculation according to the CDR that affects the results of the performance measurement type calculation.

The filter criteria includes at least one of the following:
call object filter criteria, service attribute filter criteria, and performance measurement type filter criteria;
the performance measurement type filter criteria includes:
mapping relationship between the performance measurement types to be calculated and the CDR affecting the calculation result of the performance measurement types to be calculated.

The step of performing the operation and maintenance of network devices according to the CDR received includes:
establishing call failure log information according to the CDR received; and
performing call failure log analysis based on the log information.

The method further includes:
after performing operation and maintenance of network devices according to the CDR received, analyzing a result of the operation and maintenance of network devices.

The method further includes:
after analyzing the result of the operation and maintenance of network devices, outputting or displaying a result of the analysis.

A network device, for obtaining a call detail record (CDR) of a call and transmitting the CDR to a pre-processing device, includes:
an obtaining CDR module, for obtaining the CDR and transmitting the CDR to a transmission module;
the transmission module, for transmitting the CDR obtained by the obtaining CDR module to the pre-processing device.

The obtaining CDR module includes at least one of the following:
a call traffic termination sub-module, for obtaining the CDR of a normally terminated call or in a call terminated due to malfunction, and transmitting the CDR to the transmission module;
a call traffic failure sub-module, for obtaining the CDR of a call which fails before being answered, and transmitting the CDR to the transmission module;
a supplementary service sub-module, for obtaining the CDR of a supplementary service which has occurred, and transmitting the CDR to the transmission module; and
a call traffic synchronization sub-module, for obtaining the CDR of an active call periodically, and transmitting the CDR to the transmission module.

The network device further includes:
a time stamp module, for obtaining current time information of the network devices and transmitting the time information to the pre-processing device periodically.

A pre-processing device, includes:
a statistic module, for calculating performance measurement types of the CDR sent from the network device;

The pre-processing device further includes:
a filter criteria storage module, for storing the filter criteria used in filtering the CDR;
a filter module, for filtering the CDR received by the pre-processing device according to the filter criteria stored in the filter criteria storage module, obtaining the CDR affecting results of the performance measurement type calculation and transmitting the CDR affecting the results of the performance measurement type calculation to the statistic module.

The filter criteria storage module includes at least one of the following:
an object filter storage sub-module, for storing information of call objects to which the performance measurement type calculation needs to be performed;
a service attribute filter storage sub-module, for storing information of call service attributes to which the performance measurement type calculation need to be performed; and
a performance measurement type filter storage sub-module, for storing the mapping relationship between the performance measurement types to be calculated and the CDR affecting the results of the calculation.

The pre-processing device further includes:
a log module, for establishing call failure log information according to the CDR received by the pre-processing device;
a log analysis module, for analyzing the call failure log based on the log information saved in the log module.

A system for operation and maintenance of network devices, includes a device layer and a pre-processing layer, wherein the device layer includes at least one network device and the pre-processing layer includes pre-processing device(s); and
the network device obtains a CDR of a call and transmits the CDR to the pre-processing device; the pre-processing device filters the CDR and performs centralized operation and maintenance of network devices.

The system further includes:
a post-analysis layer, for performing post-analysis of the pre-processing result outputted by the pre-processing layer.

The post-analysis layer is:
an Element management system (EMS), a Network Management System (NMS), or a Network Optimization System (NOS).

In the technical scheme provided by embodiments of the present invention, network devices report only the original call information of a call; and the pre-processing layer performs, according to the original call information, operation and maintenance management of the network devices, including performance measurement type calculation, failure log analysis, etc. Thus call services are separated from operation and maintenance management including performance measurement type calculation; and the functions of the network devices are unified, which makes the operation of the network devices more stable. The pre-processing layer according to the embodiment of the present invention can obtain the detailed record data of a original call so that the operation and maintenance management, such as performance measurement type calculation, can be more flexible and comprehensive. What's more, when the call information transmitted by the network devices contains the detailed information of a call process, the pre-processing layer need not modify the codes running in the network devices even if operation and maintenance management such as new performance measurement type calculation is performed, so the embodiments of the present invention provide quick response to operation and maintenance management such as new performance measurement type calculation. The pre-processing layer according to the embodiments of the present invention supports more measurement objects through processes of object filtering, service attribute filtering and performance measurement type filtering to ensure the integrality of the call information collected, and further ensure that the pre-processing layer can perform operation and maintenance management including comprehensive performance measurement type calculation. The pre-processing layer in accordance with the embodiments of the present invention is able to calculate the performance measurement types of a single call from a single user based on the call information transmitted from the network devices so that the pre-processing layer may provide the detailed information of every call, thus the failure in a single call can be solved quickly and accurately. Since the network devices generate and transmit the detailed record data of every call to the pre-processing layer, the information of newly added resources may be automatically represented in the call detail record when the new resources are employed in a call, thus adaptive measurement is realized. As a result, through the technical scheme provided by the embodiments of the present invention, it is easier to monitor the whole network and to perform operation and maintenance for network devices.

### Brief Description of the Drawings

Figure 1 is a schematic illustrating a system for operation and maintenance of network devices in accordance with an embodiment of the present invention;
Figure 2 is a first flowchart of the method for operation and maintenance of network devices in accordance with an embodiment of the present invention;
Figure 3 is a second flowchart of the method for operation and maintenance of network devices in accordance with an embodiment of the present invention;
Figure 4 is a third flowchart of the method for operation and maintenance of network devices in accordance with an embodiment of the present invention;
Figure 5 is a fourth flowchart of the method for operation and maintenance of network devices in accordance with an embodiment of the present invention;
Figure 6 is a fifth flowchart of the method for operation and maintenance of network devices in accordance with an embodiment of the present invention;
Figure 7 is a sixth flowchart of the method for operation and maintenance of network devices in accordance with an embodiment of the present invention.

### Detailed Description of the Invention

The embodiments of the present invention includes: obtaining, by network devices in a device layer of a network, the call detail records of calls and transmitting the call detail records to a pre-processing layer which is independent of the network devices; performing, by the pre-processing layer, centralized operation and maintenance for network devices according to the call detail records received so as to obtain the performance measurement types of the network devices.

The system, device and method provided by the embodiments of the present invention for operation and maintenance of network devices are further described with reference to accompanying drawings.

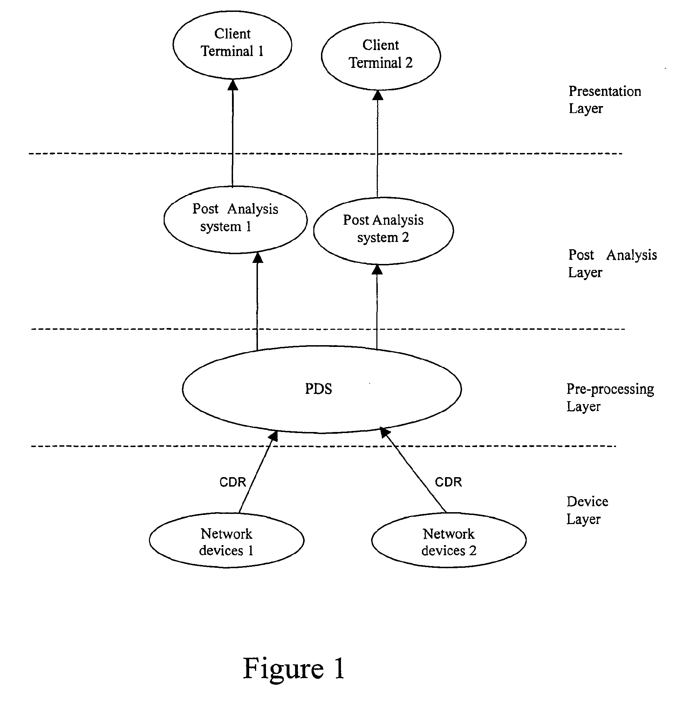

Figure 1 shows the system for operation and maintenance of network devices provided by an embodiment of the present invention.

As shown in Figure 1, the system for operation and maintenance of network devices mainly includes two parts: one is a device layer and the other is a pre-processing layer. The device layer includes at least one network device which may be any kind of host device or network element; and particularly, in an Internet Protocol (IP) Multimedia Subsystem (IMS), the network devices may be a Proxy Call Session Control Function (P-CSCF), a Serving CSCF (S-CSCF), a Media Gateway Control Function (MGCF), a Breakout Gateway Control Function (BGCF), or etc. The pre-processing layer may include a Performance Data Server (PDS) or other dedicated pre-processing devices. It can be seen from Figure 1 that the device layer and the pre-processing layer are obviously two independent parts.

The network devices in the device layer record the original call detail record data of calls, which are referred to as Call Detail Record (CDR) in the embodiments herein. The network devices transmit the CDRs to the PDS which performs statistics to the received CDRs in a centralized manner to obtain the performance measurement types that need to be measured.

The system provided by the embodiment of the present invention may further include a post-analysis layer and a presentation layer which includes at least a client terminal. The post-analysis layer analyzes, for a second time, the operation and maintenance management information outputted by the pre-processing layer, such as the performance measurement types. The analysis results generated by the post-analysis layer are outputted or displayed by the client terminal in the presentation layer. The embodiments of the present invention set no limit to the post-analysis process performed by the post-analysis layer, i.e., the post-analysis layer in the embodiments of the present invention can be realized through the post-analysis method in the prior art. The post-analysis layer at least includes an element management system (EMS), a network management system (NMS), a network optimization system (NOS), and etc.

The process performed by the network devices in the device layer and the process performed by the PDS in the pre-processing layer are described respectively below:

### A. The CDR outputting process performed by the network devices.

The network devices should output the CDR of every call. The CDR contains all detailed information of a call process. The information in a CDR includes at least the items below:
1. Data related to signaling message sending/receiving bit lists of a calling side and a called side during a call;
   The calling side is the internal side of a switch that handles the calling related signaling messages while the called side is the internal side of a switch that handles the called related signaling messages.
   The data related to signaling message sending / receiving bit lists of the calling side and the called side during a call include: the sending and receiving status of standard signaling messages in the call, e.g. whether a standard signaling message in the call is received or sent. The standard signaling messages include: sending / receiving signaling messages in a soft switch, sending / receiving signaling messages in an IMS, and etc. The sending / receiving signaling messages in a soft switch include a SET UP message, an Initial Address Message (IAM), an ALERTING message, a CONNECT message, a CONNECT ACK message, a RELEASE message, and etc.; the sending / receiving signaling messages in a CSCF include an INVITE message, a 183 message, a PRACK message, a 180 message, a 200 message, and etc.
2. Sending / receiving time of standard signaling messages during a call.
   The sending and receiving of every standard signaling message during a call correspond to a time value; and the network devices record the sending time / receiving time of the standard signaling messages. For example, the network devices may record: calling service request time, i.e., the time when the calling side receives a SET UP signaling message; called service request time, i.e., the time when the called side sends a SET UP signaling message; called ring time, i.e., the time when the called side receives an ALERTING signaling message; called answer time, i.e., the time when the called side receives a CONNECT signaling message; and conversation end time, etc.
3. Object information corresponding to a call.
   Object information corresponding to a call includes the object information to which statistic about the performance measurement types can be performed. For example, in a soft switch, the corresponding object information of a call includes one or any combination of the following items: the calling / called number of the call, the calling / called port number, the circuit numbers of an incoming trunk and an outgoing trunk, the types of the incoming trunk and the outgoing trunk, the numbers of the incoming office direction and the outgoing office direction, the CENTREX group number of the calling / called side, the PBX group number of the calling / called side, and etc.
4. Service attribute information corresponding to a call
   The service attribute information corresponding to a call includes one or any combination of the following items: the access type of the calling / called side of the call; the call type, such as an incoming call, an outgoing call or a tandem call; the call connection type, such as a domestic long-distance call, an international long-distance call or a local call; the intelligent service identity of a call; the supplementary service identity of a call; the service bearer type of a call, such as voice, video, data, fax, etc.; the failure cause of a call, the audio / video encoding pattern of a call, etc.
   The CDRs generated by the network devices include one or any combination of the following items: a call traffic termination CDR, a call traffic failure CDR, a call traffic synchronization CDR and a supplementary service CDR.

When a call is terminated in a normal manner or due to a malfunction in the call process, the network devices record the information and generates a call traffic termination CDR; if a call fails before being answered, the network devices record the information and generate a call traffic failure CDR; if a related supplementary service is performed, a supplementary service CDR should be generated to perform supplementary service statistic calculation such as the performance measurement type calculation of the forwarding destination; the network devices should generate a call traffic synchronization CDR periodically to ensure the absolute accuracy of the performance measurement type statistics within a statistic period, and transmits the CDRs of the active calls to the pre-processing layer at the end of each period so that the PDS may accurately calculate the performance measurement types such as the volume of traffic and the numbers of traffic types during a period. The network devices may generate a CDR during a call through a process of setting the value of the bit list, i.e., through setting values of corresponding fields in the CDR.

An obtaining CDR module in the network devices is employed to record and generate the call traffic termination CDR, the call traffic failure CDR, the supplementary service CDR and the call traffic synchronization CDR. Therefore the obtaining CDR module may accordingly include a call traffic termination sub-module, a call traffic failure sub-module, a supplementary service sub-module and a call traffic synchronization sub-module, which are respectively used for recording corresponding information and generating the above-mentioned CDRs. A transmission module transmits the call traffic termination CDR, the call traffic failure CDR, the supplementary service CDR and the call traffic synchronization CDR to the pre-processing layer.

The network devices may also generate time stamp CDRs periodically to facilitate the pre-processing layer to accurately calculate the performance measurement types. A time stamp CDR contains the current time of the network devices, i.e. the network devices encapsulate the current system time into the CDR and transmit the CDR to the PDS periodically, e.g., the network devices transmit a time stamp CDR to the PDS every minute so that the pre-processing layer may precisely identify the CDRs generated by the network devices at different time. The time stamp CDR is generated by a time stamp module in the network devices, and in such case, the transmission module further needs to transmit the time stamp CDR generated by the time stamp module to the pre-processing layer.

The network devices may transmit the generated CDRs to the PDS in an initiative report mode, i.e., the network devices report the CDRs upon the generation of the CDRs; the network devices may also transmit the generated CDRs to the PDS in a passive report mode, i.e., the network devices save the CDRs and transmit them to the PDS on demand of the PDS.

The information included in the CDR generated by the network devices can be set in a flexible manner according to practical requirements, i.e., it is flexible to adjust how detailed the information in the CDR is. For example, the host machine may continue with the traffic measurement on some links and the performance measurement on some circuit groups, and then generate non-call CDRs periodically to transmit the data during an entire period to the PDS. Practically, some fields can be added into a call CDR, e.g. fields of link object information and fields of message traffic for the link objects can be added, so that the information including the link traffic can be included in a service CDR and be transmitted to the PDS; therefore the PDS can learn from the service CDR that how many control messages a link object sends and receives during a call. The PDS may also analyze and calculate the CDRs transmitted from the network devices in a centralized manner to learn the operation and maintenance management information including the performance measurement types of link objects in a period.

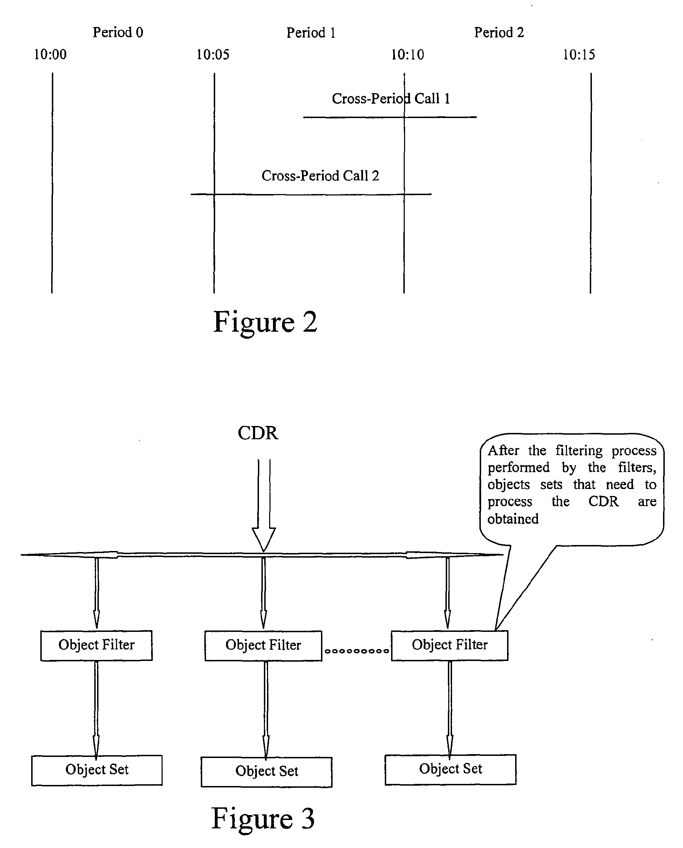

The generation of different types of CDRs by the network devices is described hereinafter with reference to accompanying Figure 2.

In Figure 2, Call 1 and Call 2 are both cross-period calls. The involved network devices should generate a call traffic synchronization CDR for Call 2 at the end of Period 0 (10: 05), and generate call traffic synchronization CDRs for the two cross-period calls respectively at the end of Period 1 (10: 10), in which each call traffic synchronization CDR reflects the status of a call at the end of the period. If both Call 1 and Call 2 are terminated normally, the network devices also need to generate call termination CDRs respectively for these two cross-period calls upon the normal termination of Call 1 and Call 2.

Suppose Call 1 is terminated or fails at 10: 12, Call 2 is terminated or fails at 10: 11, the network devices generate: a call traffic synchronization CDR for Call 2 at 10: 05; two synchronization CDRs respectively for Call 1 and Call 2 at 10: 10; a call traffic termination CDR or a call traffic failure CDR for Call 2 at 10: 11 and a call traffic termination CDR or a call traffic failure CDR for Call 1 at 10: 12.

It can be seen from the above description that the network devices can generate CDRs at real-time based on the failure, the termination and the occurrence of supplementary service of a call and transmit CDRs to the PDS; the network devices can also generate and transmit CDRs to the PDS periodically based on predetermined period. In other words, when a call is terminated within a period, the network devices should generate and transmit a call traffic termination CDR, or a call traffic failure CDR, or a supplementary service CDR at real-time; when the call is a cross-period call, the network devices also should report the call detail information at the end of the period. The generation and transmission of CDRs guarantees that the network devices generate and transmit CDRs for every call in a period so that the PDS can obtain highly integrated basic data for operation and maintenance management including performance measurement type calculation, therefore the accuracy of the operation and maintenance management information including performance measurement types is ensured.

### B. The centralized operation and maintenance management performed by a PDS.

The process of centralized operation and maintenance management is explained hereinafter, taking the calculation of performance measurement type as an example.

A PDS needs to calculate the performance measurement types based on the CDRs transmitted from the network devices. As the performance measurement types that need to be calculated differ, the PDS may directly calculate the performance measurement types without filtering the CDRs transmitted from the network devices, or the PDS may filter the CDRs transmitted from the network devices according to predetermined filter criteria. For example, the CDRs transmitted from the network devices need not be filtered for calculating the calling numbers of the calls. However, in most performance measurement type calculation processes, the PDS needs to filter the CDRs transmitted from the network devices, performs performance measurement type calculation based on the CDRs that meets the filter criteria, and obtains the performance measurement type information through calculation. When the filtering process is needed, the performance measurement type calculation process performed by the PDS includes a filtering process and a performance measurement type calculation process, and the filter criteria are stored in a filter criteria storage module of the PDS.

The filtering process may include one or any combination of the following processes: a filtering process of corresponding object information of a call, a filtering process of corresponding service attribute information of a call and a filtering process of performance measurement types. In the embodiments of the present invention, the order of the filtering processes is not fixed, i.e., the corresponding object information of the call is filtered first and the corresponding service attribute information of the call is filtered then, or, the corresponding service attribute information of the call is filtered first and the corresponding object information of the call is filtered then. When the filtering process includes all the above three processes, the order of the three processes can be adjusted on demand.

The three filtering processes are described below.

### 1. The filtering process of corresponding object information of a call.

The CDRs reported by the network devices include corresponding object information of a call. The corresponding object information of a call includes the calling / called number of the call, the calling / called port number of the call, the incoming trunk and the outgoing trunk, the incoming office direction, the outgoing office direction, the calling / called CENTREX group, etc.

The PDS side stores all the object information based on which the whole measurement system performs performance measurement type calculation. The object information can be stored in the object filter storage sub-module of the filter criteria storage module, and the object information stored by the PDS side can be the object information issued by a network manager or the default object information supported by the PDS side.

As the PDS side stores all the object information based on which the whole measurement system performs performance measurement type calculation, while each CDR from the network devices includes the object information only related to the call, the CDR should go through an object filtering process, as shown in Figure 3.

An object filter in Figure 3 includes the object filter storage sub-module and the filter module in accordance with the embodiments of the present invention. The object filter determines whether the object information in a CDR from the network devices matches the object based on which the PDS should calculate the performance measurement types, if the object information matches the object, the call corresponding to the CDR is the call concerned by the PDS, and the performance measurement types of the matched object should be calculated according to the CDR; if the object information does not match the object, the call corresponding to the CDR is filtered out by the object filters and the call is not a call concerned by the PDS, thus the performance measurement type calculation of corresponding object based on the CDR should not be performed.

A detailed example, Example 1, is described below to make clearer the filtering process of corresponding object information of a call.

Supposing that the PDS should calculate the outgoing traffic of Office Direction 2, Office Direction 3 and Office Direction 4, and the network devices report a CDR which corresponds to an outgoing call in Office Direction 2. After the object filtering process, the corresponding call of the CDR is determined to be a call concerned by the PDS, and the PDS should calculate corresponding performance measurement types in Office Direction 2 according to the information in the CDR. If the CDR reported by the network devices corresponds to an outgoing call in Office Direction 5, as the PDS only needs to calculate the outgoing traffic of Office Direction 2, Office Direction 3 and Office Direction 4, the corresponding call of the CDR is determined to be a call unconcerned by the PDS after the object filtering process, and the PDS does not calculate corresponding performance measurement types of the corresponding object according to the information in the CDR.

### 2. The filtering process of corresponding service attribute information of a call.

A CDR reported by the network devices includes corresponding service attribute information of a call. The service attribute information includes the access type of the calling / called side of the call, the intelligent service identity of the call, the supplementary service identity, the service bearer type of the call such as audio or video, etc.

The PDS side stores all the service attribute information based on which the whole measurement system performs performance measurement type calculation. The service attribute information can be stored in the service attribute filter storage sub-module of the filter criteria storage module, and the service attribute information stored by the PDS side can either be issued by a network manager or be the default service attribute information supported by the PDS side.

When the filter criteria according to the embodiments of the present invention includes object filtering criteria and service attribute filtering criteria, a set of objects for performance measurement type calculation are obtained after the object filtering process shown in Figure 3; each object included in the set for the performance measurement type calculation corresponds to a group of bodies carrying the service attribute of calls. Bodies with the same call service attribute may be grouped as a performance measurement unit. For example, when the designated call service attribute is "the calling side adopts 2G access", all bodies in which the calling side adopts 2G access form a performance measurement unit, the performance measurement unit may include bodies such as the body of the trying times of the call in which the calling side adopts 2G access, the body of the occupied & connected traffic of the call in which the calling side adopts 2G access and the body of the answer traffic of the call in which the calling side adopts 2G access; when the designated call service attribute is "the calling side adopts 3G access", all bodies in which the calling side adopts 3G access form a performance measurement unit, the performance measurement unit may include bodies such as the body of the trying times of the call in which the calling side adopts 3G access, the body of the occupied & connected traffic of the call in which the calling side adopts 3G access and the answer traffic of the call in which the calling side adopts 3G access. No matter in which way a body set is organized, the body set of the office direction object represents multiple call service attributes.

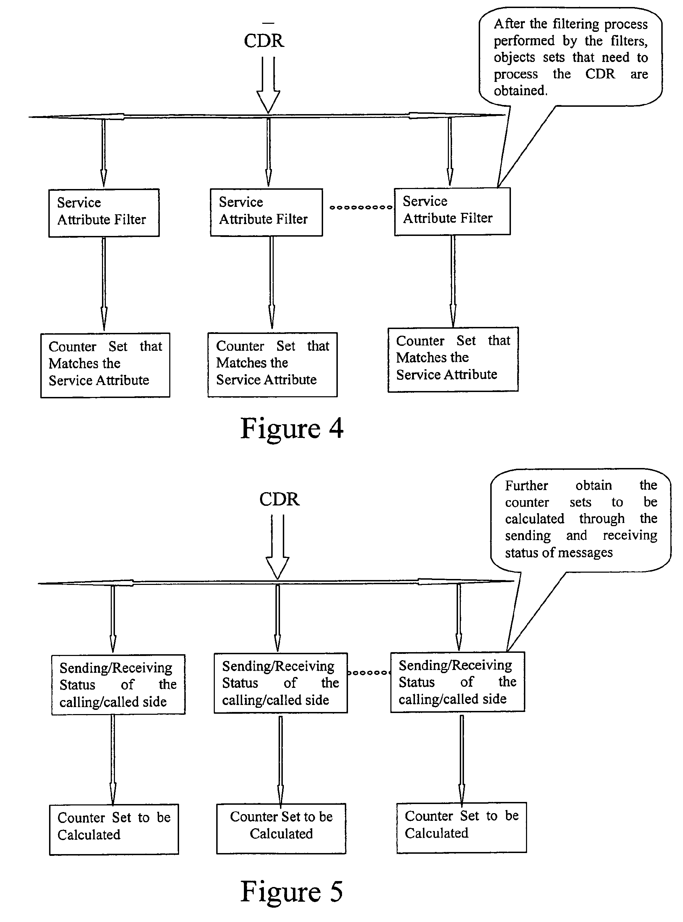

It can be seen that a body to be measured in the PDS performance measurement system may represents multiple service attributes, e.g., the body of the trying times may be of the service attribute that the calling side adopts 2G access, or it may be of the service attribute that the calling side adopts 3G access. However, the service attribute of a CDR reported by a host machine is fixed. For example, with respect to the service attribute of the access type, the access type of a CDR corresponding to a call is either 2G or 3G, or other forms; it can never be both 2G and 3G. So the PDS needs to perform service attribute information filtering for CDRs. The service attribute information filtering process is shown in Figure 4.

A service attribute filter in Figure 4 includes the service attribute filter storage sub-module and the filter module in accordance with the embodiments of the present invention. The service attribute filter determines whether the service attribute information in a CDR from the network devices matches the service attribute in the performance measurement unit, if the service attribute information matches the service attribute, the call corresponding to the CDR is a call concerned by the PDS, and the performance measurement types of the matched object and service attribute should be calculated according to the CDR; if the service attribute information does not match the service attribute, the call corresponding to the CDR is filtered out by the object filters and the call is not concerned by the PDS, thus the performance measurement type calculation of corresponding object and service attribute based on the CDR should not be performed.

A practical example, Example 2, is described below to make clearer the filtering process of corresponding service attribute information of a call.

Supposing that the types to be measured for the office direction object in a soft switch include: the trying times, the occupied times, the connected times, the answer times, the occupied traffic, the connected traffic and the answer traffic of a call, in which the calling side adopts 2G access, in the office direction; the 7 bodies forms a 2G outgoing service measurement unit. The types to be measured may further include: the trying times, the occupied times, the connected times, the answer times, the occupied traffic, the connected traffic and the answer traffic of a call, in which the calling side adopts 3G access, in the office direction; the 7 bodies forms a 3G outgoing service measurement unit. Provided that, in a CDR reported by the network devices, the calling access type is 2G. Then the types, which are the trying times, the occupied times, the connected times, the answer times, the occupied traffic, the connected traffic and the answer traffic of a call in which the calling side adopts 3G access, do not match the service attribute filter criteria, thus the 3G outgoing traffic measurement unit need not be updated; in other words, the information in the CDR is not concerned with calculating the performance measurement type of the 3G outgoing traffic measurement unit. On the other hand, the types, which are the trying times, the occupied times, the connected times, the answer times, the occupied traffic, the connected traffic and the answer traffic of a call in which the calling side adopts 3G access, match the filter criteria, thus the 2G outgoing traffic measurement unit needs to be updated; in other words, the information in the CDR is concerned with calculating the performance measurement type of the 2G outgoing traffic measurement unit.

### 3. The filtering process of the performance measurement types.

The CDR reported by the network devices includes the sending and receiving status of signaling messages which correspond to a call and the corresponding sending and receiving time point of the signaling messages. With regard to a call, the information in the CDR may include: the calling side has received a SET UP message, and the corresponding calling side service request time; the called has received an ACM message, and the corresponding called ring time; the called has received a CONNECT message, and the corresponding called answer time, etc.

The sending and receiving status of signaling messages in the CDR from the network devices are the key signaling messages in a call process, based on which the call status can be verified, the performance measurement types to be updated can be determined, and the performance measurement types to be calculated in the current call status can be also determined. This process is filtering process of the performance measurement type. For example, when the calling side has received a SET UP message, the type to be updated is the trying times; when the called side has received an ACM message, the type to be updated is the connected times, and the performance measurement type to be calculated is the connected traffic; when the called side has received a CONNECT message, the type to be updated is the answer times and the performance measurement type to be calculated is the answer traffic, etc.

Figure 5 shows a filtering process of performance measurement type. As shown in Figure 5, with regard to each type stored in the service attribute filter storage sub-module to be calculated, the filter module determines the signaling messages that affect the type according to the mapping relationship between the performance measurement types and CDRs that affect the types; then the filter module updates the performance measurement type according to the sending and receiving status of the signaling messages in the CDR. The mapping relationship between the performance measurement types and CDRs that affect the types is saved in the performance measurement type filter storage sub-module.

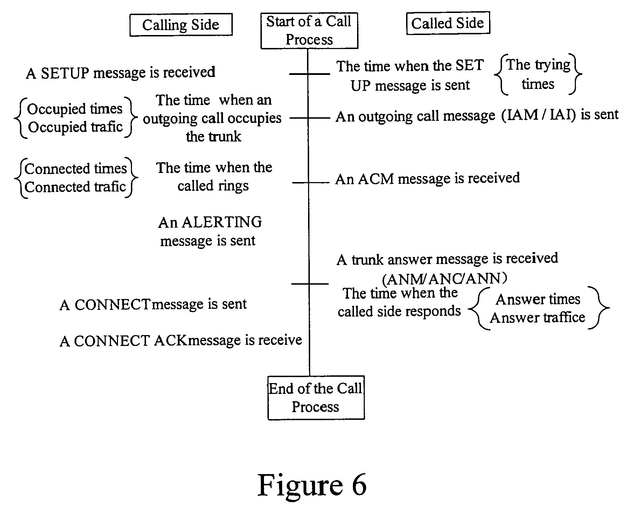

The filtering process of performance measurement type is further explained hereinafter with reference to the accompanying Figure 6 and a specific example.

As shown in Figure 6, when the calling side receives a SET UP message, the bit list information that indicates the calling side's receipt of the SET UP message is included in the CDR, and the PDS updates the performance measurement type of the trying times according to the CDR; when the called side has received an ACM message, the bit list information that indicates the called side's receipt of the ACM message is included in the CDR, and the PDS updates the performance measurement type of the connected times according to the CDR and calculates the connected traffic; when the called side has received a CONNECT message, the bit list information that indicates the called side's receipt of the CONNECT message is included in the CDR, and the PDS updates the performance measurement type of the answer time according to the CDR and calculates the answer traffic.

With regard to Example 1 and Example 2, after the object information filtering process and the service attribute filtering process, the bodies in the obtained performance measurement unit is the following performance measurement types of the call in which the calling side adopts 2G access and the office direction is 2: the trying times, the occupied times, the connected times, the answer times, the occupied traffic, the connected traffic and the answer traffic. However, the body obtained after the object information filtering process and the service attribute filtering process is not the body in which the performance measurement types need to be updated; the PDS has to make further determination according to the sending and receiving status of signaling messages in the CDR, i.e., according to the bit list information of the signaling messages in the call process. Supposing that the bit list information of the signaling messages of the calling / called side in the CDR from the network devices indicates that: the calling side has received a SET UP message, the called side has sent an IAM message and the called side has received an ACM message. Therefore the bodies to be updated by the PDS include: the trying times, the occupied number, the occupied traffic, the connected times and the connected traffic. Since the CDR of the call shows that the called side did not receive a CONNECT message, the PDS needs not update the answer times and the answer traffic.

After the above filtering processes, the performance measurement types that need to be updated and calculated are obtained, and the PDS then updates the performance measurement types through aggregating or calculating with formulas. For example, with regard to the example of an office direction object in a soft switch described above, the performance measurement types of the bodies, including the trying times, the occupied times, the connected times and the answer times of a call in which the calling side adopts 2G access, are updated through directly aggregation; and the performance measurement types of the bodies, including the occupied traffic, the connected traffic and the answer traffic, are updated through calculating with standard formulas, e.g., the answer traffic can be calculated through the formula: answer traffic = (the called answer time - the call start time) / number of periods.

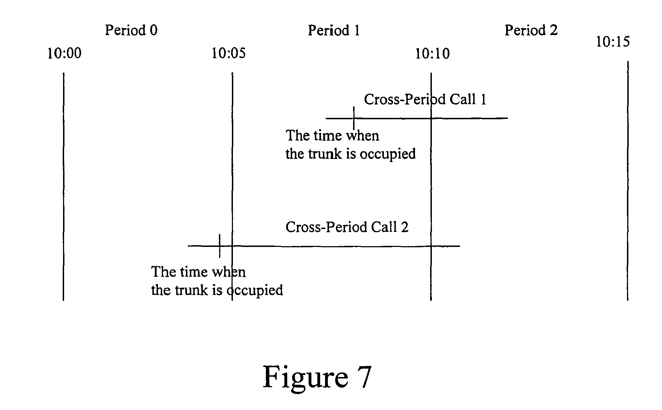

It should be noted that while updating the performance measurement types, the time should further be determined. For example, while updating the occupied times, it should be determined whether the time when the trunk is occupied is within the period. As shown in Figure 7, the time when the trunk is occupied by cross-period Call 1 is in period 1, since the PDS has aggregated the trunk occupied times according to the call traffic synchronization CDR generated by the network devices at the period end point 10: 10, it cannot aggregated the trunk occupied times again according to the call traffic termination CDR generated in period 2 for Call 1. It can be deduced in the same way that, since the time when the trunk is occupied by cross-period Call 2 is in period 0, the PDS has aggregated the trunk occupied times according to the call traffic synchronization CDR generated by the network devices at the period end point 10: 05, it cannot aggregated the trunk occupied times again according to the call traffic synchronization CDR generated at 10:10 and the call traffic termination CDR generated in period 2 for Call 2.

While updating the performance measurement types including the trying times, the connected times, the answer times, the occupied traffic, the connected traffic and the answer traffic by the PDS, the same determination process should be performed.

The pre-processing layer in accordance with the embodiments of the present invention is described above with reference to the examples of performance measurement type calculation; however, the pre-processing layer in accordance with the embodiments of the present invention may perform other operation and maintenance management processes, such as the process of handling a call failure log. A log module and a log analysis module are employed to perform the handling process, wherein the log module is mainly used for establishing and saving the call failure log information according to CDRs from the network devices, and the log analysis module is mainly used for analyzing the call failure logs saved in the log module. Since there are great varieties of operation and maintenance management processes performed for network devices, the processes are not enumerated one by one herein.

The foregoing is only preferred embodiments of the present invention and is not to be used for limiting the protection scope thereof. Any modification, equivalent substitution, improvement within the spirit and principle of the invention should be covered in the protection scope of the invention.

## Claims

1. A method for operation and maintenance of network devices comprising:
obtaining a call detail record (CDR) of a call and transmitting the CDR;
performing operation and maintenance of network devices according to the CDR received.

2. The method according to Claim 1, wherein the CDR of the call comprises at least one of the following:
data related to message sending / receiving bit lists indicating the sending / receiving status of standard signaling messages in the call on the calling / called side,
sending / receiving time of standard signaling messages in the call,
corresponding object information of the call; and
corresponding service attribute information of the call.

3. The method according to Claim 1, wherein the step of obtaining the CDR of a call comprises at least one of the following:
obtaining the CDR of a normally terminated call;
obtaining the CDR of a call terminated in malfunction;
obtaining the CDR of a call which fails before being answered;
obtaining the CDR of an occurred supplementary service; or
obtaining the CDR of an active call periodically.

4. The method according to Claims 2 or 3, wherein the step of obtaining the CDR of a call and transmitting the CDR further comprises:
obtaining periodically current time information of network devices and transmitting the current time information.

5. The method according to any one preceding claim, wherein the step of performing the operation and maintenance management of network devices according to the CDR received comprises:
performing performance measurement type calculation according to the CDR received.

6. The method according to Claim 5, before the step of performing the performance measurement type calculation according to the CDR, further comprising:
filtering the CDR received according to filter criteria saved; and
obtaining the CDR that affects results of the performance measurement type calculation;
wherein the step of performing the performance measurement type calculation according to the CDR comprises:
performing performance measurement type calculation according to the CDR that affects the results of the performance measurement type calculation.

7. The method according to Claim 6, wherein the filter criteria comprises at least one of the following:
call object filter criteria, service attribute filter criteria, and performance measurement type filter criteria;
the performance measurement type filter criteria comprises:
mapping relationship between the performance measurement types to be calculated and the CDR affecting the calculation result of the performance measurement types to be calculated.

8. The method according to any one preceding claim, wherein the step of performing the operation and maintenance of network devices according to the CDR received comprises:
establishing call failure log information according to the CDR received; and
performing call failure log analysis based on the log information.

9. The method according to any one preceding claim, further comprising:
after performing operation and maintenance of network devices according to the CDR received, analyzing a result of the operation and maintenance of network devices.

10. The method according to Claim 9, further comprising:
after analyzing the result of the operation and maintenance of network devices, outputting or displaying a result of the analysis.

11. A network device, for obtaining a call detail record (CDR) of a call and transmitting the CDR to a pre-processing device, comprising:
an obtaining CDR module, for obtaining the CDR and transmitting the CDR to a transmission module;
the transmission module, for transmitting the CDR obtained by the obtaining CDR module to the pre-processing device.

12. The network device according to Claim 11, wherein the obtaining CDR module comprises at least one of the following:
a call traffic termination sub-module, for obtaining the CDR of a normally terminated call or in a call terminated due to malfunction, and transmitting the CDR to the transmission module;
a call traffic failure sub-module, for obtaining the CDR of a call which fails before being answered, and transmitting the CDR to the transmission module;
a supplementary service sub-module, for obtaining the CDR of a supplementary service which has occurred, and transmitting the CDR to the transmission module; and
a call traffic synchronization sub-module, for obtaining the CDR of an active call periodically, and transmitting the CDR to the transmission module.

13. The network device according to Claim 12, further comprising:
a time stamp module, for obtaining current time information of the network devices and transmitting the time information to the pre-processing device periodically.

14. A pre-processing device, comprising:
a statistic module, for calculating performance measurement types of the CDR sent from a network device.

15. The pre-processing device according to Claim 14, further comprising:
a filter criteria storage module, for storing the filter criteria used in filtering the CDR;
a filter module, for filtering the CDR received by the pre-processing device according to the filter criteria stored in the filter criteria storage module, obtaining the CDR affecting results of the performance measurement type calculation and transmitting the CDR affecting the results of the performance measurement type calculation to the statistic module.

16. The pre-processing device according to Claim 15, wherein the filter criteria storage module comprises at least one of the following:
an object filter storage sub-module, for storing information of call objects to which the performance measurement type calculation needs to be performed;
a service attribute filter storage sub-module, for storing information of call service attributes to which the performance measurement type calculation need to be performed; and
a performance measurement type filter storage sub-module, for storing the mapping relationship between the performance measurement types to be calculated and the CDR affecting the results of the calculation.

17. The pre-processing device according to Claim 14, 15 or 16, further comprising:
a log module, for establishing call failure log information according to the CDR received by the pre-processing device;
a log analysis module, for analyzing the call failure log based on the log information saved in the log module.

18. A system for operation and maintenance of network devices, comprising a device layer and a pre-processing layer, wherein the device layer comprises at least one network device and the pre-processing layer comprises pre-processing device(s); and
the network device obtains a CDR of a call and transmits the CDR to the pre-processing device; the pre-processing device filters the CDR and performs centralized operation and maintenance of network devices.

19. The system according to Claim 18, further comprising:
a post-analysis layer, for performing post-analysis of the pre-processing result outputted by the pre-processing layer.

20. The system according to Claim 19, wherein the post-analysis layer is:
an Element management system (EMS), a Network Management System (NMS), or a Network Optimization System (NOS).
